# EUROPEAN PATENT APPLICATION

(11) **EP 1 634 523 A1**
(43) Date of publication of application: **15.03.2006**
(21) Application number: 04104836.4
(22) Date of filing: 01.10.2004
(51) Int. Cl.: A47J 43/10

(54) **Whisk**

(30) Priority: 08.09.2004 US 936055
(71) Applicant: Zyliss AG, CH-3250 Lyss (CH)
(72) Inventor: Overthun, Thomas, San Francisco, California 94117 (US); Adler, Ari T., San Francisco, California 94107 (US); Yurchenco, James, Palo Alto, California 94303 (US); Papadopoulos, Annetta M., Palo Alto, California 94301 (US)
(74) Representative: BOVARD AG

(57) **Abstract**

In general, the present invention provides a novel whisking device having independent wire movement accomplished via a non-crossing wire pattern. In accordance with one embodiment of the present invention, the whisk comprises a handle (202) having a first end and a second end, and a plurality of whisk elements (206) coupled to and extending outward from the second end of the handle. The plurality of whisk elements have a first region and a second region, wherein the plurality of whisk elements in the first region form a generally conical shape, and wherein the plurality of whisk elements in the second region are non-crossing and form a generally hemispherical shape. In one embodiment, the non-crossing whisk elements in the second region have a generally hemispherical shape whose terminus comprises a generally circular gap (208) between the whisk elements.

## Description

### FIELD OF THE INVENTION

The present invention generally relates to food preparation devices and, more particularly, to an improved whisking apparatus.

### BACKGROUND OF THE INVENTION

Various whisking devices have been used for many years in connection with food products such as sauces, gravies, and the like. Many of these whisks are "wire whisks," which typically include a number of wires (e.g., elongated wire loops) extending from a handle or other such fixture.

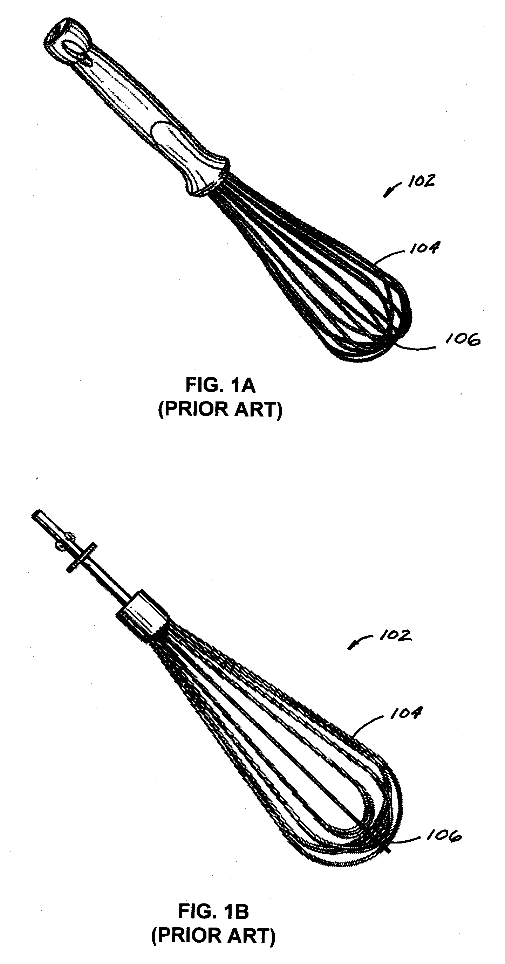

Referring to Figs. 1A and 1 B, for example, typical wire whisking devices 102 include a set of wires 104. As shown in Fig. 1A, these wires may be secured to a handle that is grasped by a user. Alternatively, as shown in Fig. 1 B, the wires may be attached to a fixture intended to interface with an automated mixer or other such device.

In prior art whisks such as these, there is significant difficulty associated with cleaning the wires 104 after use. That is, depending upon the viscosity of the material being whisked, it is common for the material to collect between the wires where they cross, which is typically (but not exclusively) located at the end 106 of wires 104. Even in cases where the wires are displaced axially (Fig. 1 B) to minimize crossing, it is still common for materials such as batters, gravies, etc. to accumulate between the wires, making cleanup extremely difficult.

Accordingly, there is a need for whisking devices which overcome these and other limitation of the prior art.

### SUMMARY OF THE INVENTION

In general, the present invention provides a novel whisking device having independent wire movement accomplished via a non-crossing wire pattern. In accordance with one embodiment of the present invention, the whisk comprises a handle having a first end and a second end, and a plurality of whisk elements coupled to and extending outward from the second end of the handle. The plurality of whisk elements have a first region and a second region, wherein the plurality of whisk elements in the first region form a generally conical shape, and wherein the plurality of whisk elements in the second region are non-crossing and form a generally hemispherical shape. In one embodiment, the non-crossing whisk elements in the second region have a generally hemispherical shape whose terminus comprises a generally circular gap between the whisk elements.

### BRIEF DESCRIPTION OF THE DRAWINGS

A more complete understanding of the present invention may be derived by referring to the detailed description when considered in connection with the Figures, where like reference numbers refer to similar elements throughout the Figures, and:
FIG. 1A is an isometric overview of a prior art whisking device;
FIG. 1 B is an isometric overview of another prior art whisking device;
FIG. 2 is an isometric overview of a whisk in accordance with one embodiment of the present invention;
FIG. 3 is a bottom view of a whisk corresponding to that shown in Fig. 2; and
FIG. 4 is a side view of a whisk corresponding to that shown in Fig. 2.

### DETAILED DESCRIPTION

The following description is of exemplary embodiments of the invention only, and is not intended to limit the scope, applicability or configuration of the invention in any way. Rather, the following description is intended to provide a convenient illustration for implementing various embodiments of the invention. As will become apparent, various changes may be made in the function and arrangement of the elements described in these embodiments without departing from the scope of the invention.

In general, the present invention provides a novel whisking device having independent wire movement accomplished via a non-crossing wire pattern. In accordance with one embodiment of the present invention, the whisk comprises a handle having a first end and a second end, and a plurality of whisk elements coupled to and extending outward from the second end of the handle. The plurality of whisk elements have a first region and a second region, wherein the plurality of whisk elements in the first region form a generally conical shape, and wherein the plurality of whisk elements in the second region are non-crossing and form a generally hemispherical shape. In one embodiment, the non-crossing whisk elements in the second region have a generally hemispherical shape whose terminus comprises a generally circular gap between the whisk elements.

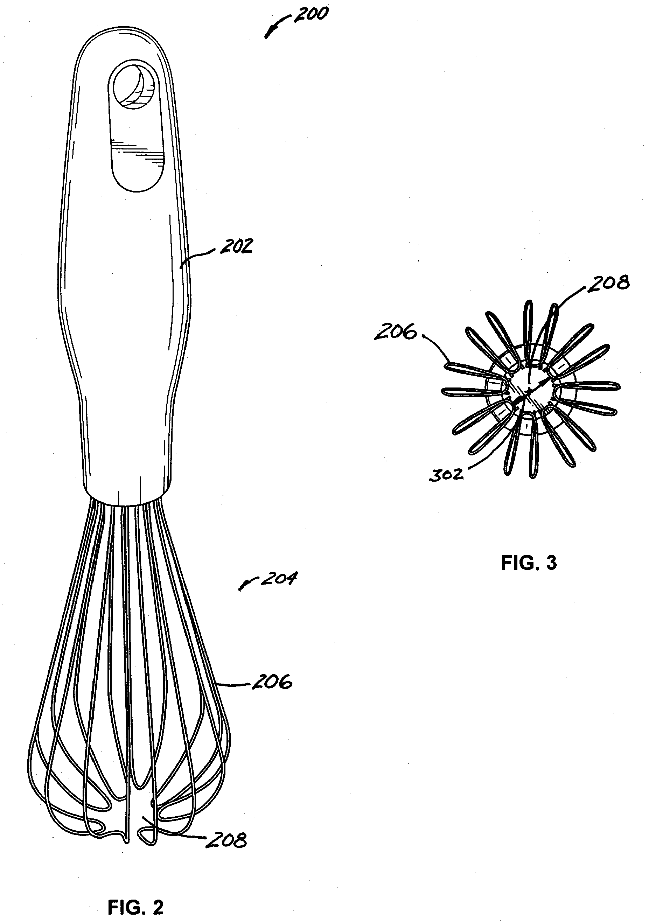

Referring now to Fig. 2, an exemplary whisking device 200 in accordance with the present invention comprises a handle 202 having a first end 201 and a second end 203. A whisking portion 204 includes a plurality of whisk elements (e.g., wire elements) 206 extending outward from end 203 of handle 202. Whisk elements 206 are configured such that they do not cross at the end opposite handle 202, leaving a vacancy, open region, or non-crossing region 208. This is further illustrated in the end-on or bottom view shown in Fig. 3.

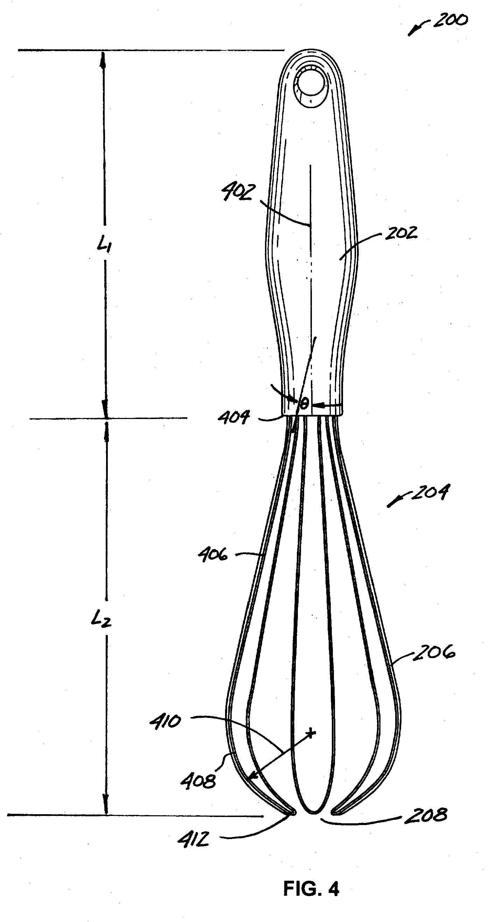

Fig. 4 shows additional geometric details of an exemplary whisk 200. As shown, whisk elements 206 form a first region 420 and a second region 422. The whisk elements 206 in first region 420 are generally conical-shaped (i.e., around axis 402), and the elements in the second region 422 are generally hemispherical-shaped. The whisk elements 206 in second region 422 are non-crossing. That is, at point 208, there is an opening, preventing the accumulating of batter, gravy, or other such whisked matter.

Each of the whisk elements 206 may be formed as wire loop segments wherein each end of the wire is attached to end 404 of handle 202, and each wire itself is suitably bent or formed (at point 412) to form the perimeter of opening or non-crossing region 208. The present invention is not so limited, however, and any suitable whisk element shapes may be employed.

Furthermore, whisk elements 106 may be configured in any symmetrical or asymmetrical manner. As shown in Fig. 3, the whisk elements are preferably distributed radially and equidistantly around the perimeter of the second hand of the handle, forming an effective opening diameter 302 around point 208.

Any number of whisk elements may be used. In one embodiment whisk 200 includes between six and ten whisk element, for example, eight whisk elements as shown.

Handle 202 is shown as a user-grippable region for manual whisking. It will be appreciated that the present invention may be used in the context of any whisking device, whether manual, automated, or a combination thereof. Therefore, the exemplary handle shape shown in the drawings is not intended as a limitation. The handle 202 may be configured, for example, to interface with an electric mixer (e.g., as shown in Fig. 1 B).

It will be appreciated that the scale and shapes shown in the drawings are in no way limiting to the range of possible shapes encompassed by this invention. The illustrated embodiment is what is often termed a "balloon whisk," but any whisking device would profit from the invention.

Nevertheless, Fig. 4 depicts various dimensions that may be used to characterize various whisks. As shown, hemispherical region 422 has a radius 410 which may vary depending upon the design. Likewise, whisking region 204 has a characteristic length L₂, while handle 202 has a characteristic length L₁.

The individual wires 206 may extend from handle 202 at any convenient angle 1. In the illustrated embodiment, the generally circular gap 208 has a diameter substantially equal to the circular pattern of wire elements as attached to end 203. This particular embodiment is best illustrated in Fig. 3. In one embodiment, L2 is greater than L1, and 1 is between approximately 5° and 10°. The scale of the whisk may be selected in accordance with the desired task. For example, whisk 200 may be fairly large (where L2 equals approximately 4.0 inches or greater) or rather small (where L2 equals approximately 3.0 inches or less).

Wire elements 206 may be formed from any suitable material, including various metals, plastics, ceramics, composites, etc. In a preferred embodiment, elements 206 comprise suitably rigid stainless steel wires. Similarly, handle 202 may be formed from any suitable metal, plastic, ceramic, or composite material. In a preferred embodiment, handle 202 comprises a high-impact plastic.

As shown, the invention provides a whisking element that is easy to clean, as the opening or non-crossing region at the terminus of the whisk does not collect whisking material. That is, no food becomes trapped in the wire mesh, as is typical with prior art whisking devices. This design has the added advantage that there is more surface area at the terminus of the whisk, and the whisk elements themselves are allowed a greater degree of freedom of movement during whisking. This also improves the haptic properties of the whisk, i.e., the tactile response provided to the user during whisking.

Other advantages and structural details of the invention will be apparent from the attached figures, which will be well understood by those skilled in the art. The present invention has been described above with to a particular exemplary embodiment. However, many changes, combinations and modifications may be made to the exemplary embodiments without departing from the scope of the present invention.

## Claims

1. A whisk comprising:
a handle having a first end and a second end;
a plurality of whisk elements coupled to and extending outward from said second end of said handle, wherein said plurality of whisk elements in said second region are non-crossing.

2. The whisk of claim 1, wherein each of said whisk elements comprises a wire loop segment whose ends are fixed to said second end of said handle.

3. The whisk of claim 1, wherein each of said whisk elements are distributed radially and equidistantly around the perimeter of said second end of said handle.

4. A whisk comprising:
a handle having a first end and a second end;
a plurality of whisk elements coupled to and extending outward from said second end of said handle, said plurality of whisk elements having a first region and a second region, wherein said plurality of whisk elements in said first region form a generally conical shape, and wherein said plurality of whisk elements in said second region are non-crossing and form a generally hemispherical shape.

5. The whisk of claim 4, wherein each of said whisk elements comprises a wire loop segment whose ends are fixed to said second end of said handle.

6. The whisk of claim 4, wherein each of said whisk elements are distributed radially and equidistantly around the perimeter of said second end of said handle.

7. The whisk of claim 4, wherein said plurality of whisk elements comprises between six and ten whisk element.

8. The whisk of claim 7, wherein said plurality of whisk elements comprises eight whisk elements.

9. The whisk of claim 4,wherein said plurality of non-crossing whisk elements in said second region have a generally hemispherical shape whose terminus comprises a generally circular gap between said whisk elements.

10. The whisk of claim 9, wherein said whisk elements are distributed radially and equidistantly around the perimeter of said second end of said handle in a first circular pattern, and said generally circular gap at said terminus has a diameter substantially equal to the diameter of said first circular pattern.
